(19)

**Europäisches Patentamt**
**European Patent Office**
**Office européen des brevets**

(11) **EP 4 579 898 A1**

(12) **EUROPEAN PATENT APPLICATION**

(43) Date of publication:
**02.07.2025   Bulletin 2025/27**

(21) Application number: **24223352.6**

(22) Date of filing: **27.12.2024**

(51) International Patent Classification (IPC):
*H01M 50/143* (2021.01)     *H01M 50/152* (2021.01)
*H01M 50/213* (2021.01)     *H01M 50/291* (2021.01)
*H01M 50/559* (2021.01)     *H01M 50/147* (2021.01)
*H01M 50/342* (2021.01)

(52) Cooperative Patent Classification (CPC):
**H01M 50/143; H01M 50/147; H01M 50/152;**
**H01M 50/213; H01M 50/291; H01M 50/3425;**
**H01M 50/559**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:  **29.12.2023   PCT/CN2023/143521**

(71) Applicants:
• **HUIZHOU EVE POWER CO., LTD**
**Huizhou, Guangdong 516039 (CN)**
• **Eve Power Co., Ltd.**
**Jingmen, Hubei 448000 (CN)**

(72) Inventors:
• **HUANG, Liming**
**Huizhou, Guangdong (CN)**
• **MIN, Changfei**
**Huizhou, Guangdong (CN)**
• **LIU, Rongwei**
**Huizhou, Guangdong (CN)**
• **XU, Yuebin**
**Huizhou, Guangdong (CN)**
• **HE, Wei**
**Huizhou, Guangdong (CN)**
• **LIU, Jincheng**
**Huizhou, Guangdong (CN)**

(74) Representative: **Murgitroyd & Company**
**165-169 Scotland Street**
**Glasgow G5 8PL (GB)**

(54) **BATTERY EXPLOSION-PROOF STRUCTURE, BATTERY, AND BATTERY PACK**

(57)    A battery explosion-proof structure, a battery, and a battery pack are provided. The battery explosion-proof structure includes a cover plate (110) provided with a first score (111) and a second score (112). A thickness of the cover plate (110) at the first score (111) is less than a thickness of the cover plate (110) at the second score (112). The first score (111) includes a first segment (1111) and a second segment (1112) connected together. The first segment (1111) includes a first end (1113) and a second end (1114). The second segment (1112) includes a third end (1115) and a fourth end (1116). A distance between the first end (1113) and the third end (1115) is greater than a distance between the second end (1114) and the fourth end (1116).

EP 4 579 898 A1

**Description**

TECHNICAL FIELD

The present application relates to the field of power battery technologies, and, more particularly, to a battery explosion-proof structure, a battery, and a battery pack.

BACKGROUND

Cover plates of batteries are generally provided with explosion-proof films, and the explosion-proof films gradually deform with increasing internal pressure until the explosion-proof starts. In related technologies, during a thermal runaway process of the batteries, when the temperature of the batteries rises to a certain stage, internal electrolyte will decompose into combustible gases such as methane. As the temperature of the batteries continues to rise, combustion gases such as oxygen will also decompose inside the batteries. When the internal pressure of the batteries further increases, the explosion-proof films burst. At the moment of the explosion-proof films burst, the combustible gases, the combustion-supporting gases, and substances inside the batteries interact with each other, thereby aggravating a degree of thermal runaway and easily causing the batteries to explode.

SUMMARY

A battery explosion-proof structure, a battery, and a battery pack are provided to solve a problem that when explosion-proof structures in related technologies burst, combustible gases, combustion-supporting gases, and substances inside batteries interact with each other, thereby aggravating a degree of thermal runaway and easily causing batteries to explode.

In a first aspect, a battery explosion-proof structure is provided by the embodiments of the present application. The battery explosion-proof structure includes a cover plate. The cover plate is provided with a first score and a second score. A thickness of the cover plate at the first score is less than a thickness of the cover plate at the second score. The first score includes a first segment and a second segment connected together. The first segment includes a first end and a second end. The second segment includes a third end and a fourth end. A distance between the first end and the third end is greater than a distance between the second end and the fourth end.

In a second aspect, a battery is provided by the embodiments of the present application. The battery includes the battery explosion-proof structure mentioned above, a wound core, and a housing. The wound core is installed inside the housing. One end of the housing is provided with an opening, and a cover plate is sealed and connected to the housing to seal the opening.

In a third aspect, a battery pack is provided by the embodiments of the present application. The battery pack includes the battery mentioned above.

BENEFICIAL EFFECTS

The beneficial effects of the present application are illustrated below. A battery explosion-proof structure, a battery, and a battery pack are provided by the embodiments of the present application. The cover plate is provided with a first score and a second score. A thickness of the cover plate at the first score is less than a thickness of the cover plate at the second score. The first score includes a first segment and a second segment connected together. A distance between two ends of the first segment and two ends of the second segment is different, which is conducive to a directional burst of the first score. When internal pressure of the battery increases, the first score on the cover plate bursts first, and the second score on the cover plate bursts again to form a secondary pressure relief of the battery. Combustible gases can be discharged during a first burst, and combustion-supporting gases can be discharged during a second burst, so as to achieve a purpose of time-sharing discharge of the combustible gases and the combustion-supporting gases, overcome a problem that when explosion-proof structures in related technologies burst, the combustible gases, the combustion-supporting gases, and substances inside batteries interact with each other, thereby aggravating a degree of thermal runaway and easily causing the batteries to explode, improve the reliability of the cover plate, and ensure the explosion-proof effect.

BRIEF DESCRIPTION OF THE DRAWINGS

FIG. 1 is a top view of a first form of a battery explosion-proof structure provided by some embodiments of the present application.

FIG. 2 is a cross-sectional view of the battery explosion-proof structure shown in FIG. 1 along A-A.

FIG. 3 is a partial enlarged view at a position A shown in FIG. 1.

FIG. 4 is a partial enlarged view at a position B shown in FIG. 2.

FIG. 5 is a top view of a second form of the battery explosion-proof structure provided by some embodiments of the present application.

FIG. 6 is a cross-sectional view of the battery explosion-proof structure shown in FIG. 5 along B-B.

FIG. 7 is an annotation view of a first score of the battery explosion-proof structure provided by some embodiments of the present application.

FIG. 8 is a top view of a third form of the battery explosion-proof structure provided by some embodiments of the present application.

FIG. 9 is a cross-sectional view of the battery explosion-proof structure shown in FIG. 8 along L-L.

FIG. 10 is an annotation view of FIG. 8.

FIG. 11 is a cross-sectional view of a battery provided by some embodiments of the present application.

FIG. 12 is a partial enlarged view at a position H shown in FIG. 11.

FIG. 13 is a partial enlarged view at a position M shown in FIG. 11.

FIG. 14 is a three-dimensional view of a battery pack provided by some embodiments of the present application.

FIG. 15 is a side view of the battery pack provided by some embodiments of the present application.

FIG. 16 is a cross-sectional view of the battery pack shown in FIG. 15 along D-D.

Reference numerals:

100, battery; 110, cover plate; 111, first score; 1111, first segment; 1112, second segment; 1113, first end; 1114, second end; 1115, third end; 1116, fourth end; 1117, third segment; 1118, second groove wall; 1119, second sub-groove; 112, second score; 1121, fifth end; 1122, sixth end; 113, first sub-part; 114, second sub-part; 1141, sinking table; 1142, boss; 115, third sub-part; 116, fourth sub-part; 117, first side surface; 118, second side surface; 120, explosion-proof groove; 121, first sub-groove; 1211, first groove wall; 130, mounting base; 131, mounting groove; 132, baffle plate; 133, first sub-plate; 134, second sub-plate; 140, wound core; 150, housing; 151, opening; 152, positive terminal; 153, flange; 154, pressing plate; 155, sealing member; 160, first current collector; 170, second current collector; 180, insulating member.

DETAILED DESCRIPTION

A battery explosion-proof structure, a battery, and a battery pack are provided by the embodiments of the present application, to solve a problem that when explosion-proof structures in related technologies burst, combustible gases, combustion-supporting gases, and substances inside batteries interact with each other, thereby aggravating a degree of thermal runaway and easily causing batteries to explode. The following will be explained in conjunction with the attached drawings.

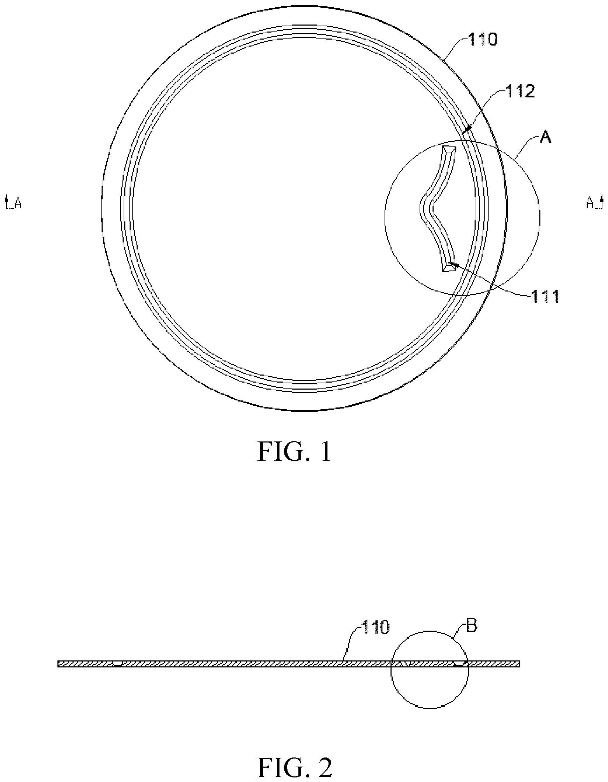

Referring to FIG. 1, FIG. 2, FIG. 5, and FIG. 8, a battery explosion-proof structure includes a cover plate 110. The cover plate 110 is provided with a first score 111 and a second score 112. A thickness of the cover plate 110 at the first score 111 is less than a thickness of the cover plate 110 at the second score 112. The first score 111 includes a first segment 1111 and a second segment 1112 connected together. The first segment 1111 includes a first end 1113 and a second end 1114. The second segment 1112 includes a third end 1115 and a fourth end 1116. A distance between the first end 1113 and the third end 1115 is greater than a distance between the second end 1114 and the fourth end 1116.

In some embodiments, the cover plate 110 has a disc-like structure. A material of the cover plate 110 may be steel, such as SPCC material and stainless-steel material. The stainless-steel material may be SUS410, SUS306, SUS316, SUS430, SUS444, etc. When the SPCC material is used, nickel may be plated on both sides of the cover plate 110. A thickness of each of plating layers may range from 0.3 µm to 8 µm. The thickness of the plating layers on both sides may be the same or different.

It may be understood that since the thickness of the cover plate 110 at the first score 111 is less than the thickness of the cover plate 110 at the second score 112, as the air pressure inside the battery increases, the cover plate 110 at the first score 111 bursts first to discharge combustible substances. Then, the cover plate 110 at the second score 112 bursts again to discharge combustion-supporting substances. The first score 111 includes the first segment 1111 and the second segment 1112 connected together. The first segment 1111 includes the first end 1113 and the second end 1114, and the second segment 1112 includes the third end 1115 and the fourth end 1116. On one side surface of the cover plate 110, the distance between the first end 1113 and the third end 1115 is greater than the distance between the second end 1114 and the fourth end 1116, which is conducive to the burst of the first score 111.

In some embodiments, an angle is defined between the first segment 1111 and the second segment 1112. When the first score 111 bursts, the second end 1114 and the fourth end 1116 burst first, which is conducive to the burst of the first score 111. The cover plate 110 at the first score 111 bursts under a first pressure. The cover plate 110 at the second score 112 bursts under a second pressure, and the first pressure is less than the second pressure, so as to form a secondary pressure relief of the battery. The first burst can discharge combustible gases, and the second burst can discharge the combustion-supporting gases, so as to realize a purpose of time-sharing discharge of the combustible gases and the combustion-supporting gases, overcome the problem that when explosion-proof structures in related technologies burst, the combustible gases, the combustion-supporting gases, and substances inside batteries interact with each other, aggravating a degree of thermal runaway and easily causing batteries to explode, thereby having good explosion-proof effect.

In some embodiments, referring to FIG. 1, along a radial direction of the cover plate 110, the first score 111 is spaced apart from the second score 112, and the second score 112 is closer to a center of the cover plate 110 than the first score 111. Taking a circular cover plate 110 as an example, the center of the cover plate 110 refers to a position of a centre of a circle of the cover plate 110.

It may be understood that when the air pressure inside the battery rises, the cover plate 110 deforms and bulges to form a hemispherical-shape or a hat-shape. The first score 111 is provided closer to the center of the cover plate 110, so that deformation at the position of the first score 111 is relatively large, which is conducive to the burst of the first score 111.

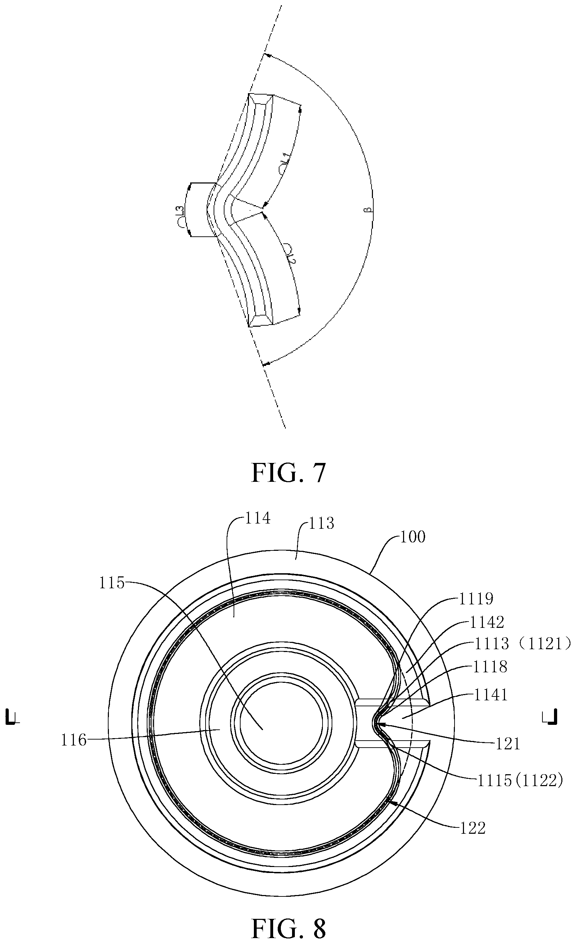

In some embodiments, referring to FIG. 8, the second score 112 is arc-shaped. The second score 112 includes a fifth end 1121 and a sixth end 1122. The first score 111 is located between the fifth end 1121 and the sixth end 1122. In some embodiments, along a circumferential direction of the second score 112, the ends of the first score 111 are spaced from the ends of the second score 1122, so that a pressure relief area is large enough to ensure the pressure relief effect.

Based on the embodiments mentioned above, referring to FIG. 8, the first score 111 and the second score 112 are communicated. That is, the first end 1113 is connected to the fifth end 1121, the third end 1115 is connected to the sixth end 1122, and the first score 111 and the second score 112 are enclosed in a closed shape.

It may be understood that a projection of the first score 111 and the second score 112 on one side surface of the cover plate 110 is enclosed in a closed shape to ensure the pressure relief area. At the same time, after the cover plate 110 at the first score 111 bursts, the cover plate 110 at the second score 112 is broken through at the junction between the first score 111 and the second score 112, which is conducive to the burst of the cover plate 110 at the second score 112, thereby ensuring that the explosion-proof structure can be burst smoothly. A part of the cover plate 110 inside the first score 111 and the second score 112 is completely separated from a part of the cover plate 110 outside the first score 111 and the second score 112, so as to realize a complete burst of the explosion-proof structure. The pressure relief area is large enough to ensure the explosion-proof effect.

In some embodiments, the second score 112 is a closed ring, such as a circular ring or a multilateral ring. The first score 111 is spaced apart from the second score 112.

It may be understood that when the cover plate 110 at the second score 112 bursts, the cover plate 110 on both sides of the second score 112 is completely separated to define a larger pressure relief port, thereby ensuring that the explosion-proof structure can be burst smoothly, realizing the complete burst of the explosion-proof structure, and ensuring the pressure relief effect.

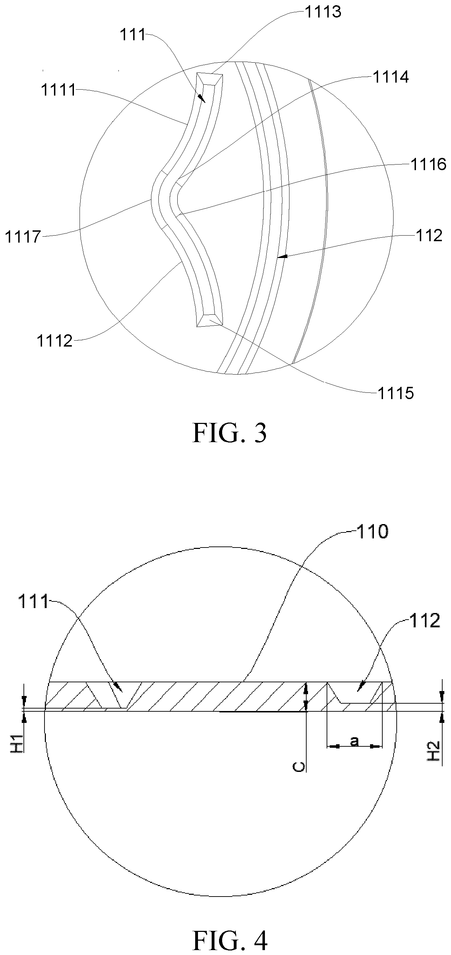

In some embodiments, referring to FIG. 2 and FIG. 3, the second end 1114 is closer to the center of the cover plate 110 than the first end 1113. The fourth end 1116 is closer to the center of the cover plate 110 than the third end 1115. The first score 111 protrudes in a direction towards the centre of the circle of the cover plate 110.

A distance between the second end 1114 and the center of the cover plate 110 is the same as a distance between the fourth end 1116 and the center of the cover plate 110. A distance between the first end 1113 and the center of the cover plate 110 is the same as a distance between the third end 1115 and the center of the cover plate 110. That is, the distance between the second end 1114 and the center of the cover plate 110 and the distance between the fourth end 1116 and the center of the cover plate 110 are less than the distance between the first end 1113 and the center of the cover plate 110 and the distance between the third end 1115 and the center of the cover plate 110.

It may be understood that the first score 111 is designed as a Chinese character "eight" shape, and a tip of the first score 111 is close to the center of the cover plate 110. When the cover plate 110 deforms under an action of the air pressure, deformation at the second end 1114 and the fourth end 1116 of the first score 111 is greater than a deformation at the first end 1113 and the third end 1115. Since the distance between the second end 1114 and the fourth end 1116 is small and the deformation is large, the first score 111 extends from the second end 1114 and the fourth end 1116 to the first end 1113 and the third end 1115 when the first score 111 bursts, thereby ensuring a smooth burst of the first score 111, which is conducive to a primary pressure relief.

In other embodiments, the first end 1113 is closer to the center of the cover plate 110 than the second end 1114, the third end 1115 is closer to the center of the cover plate 110 than the fourth end 1116, and the first score 111 protrudes in a direction towards an edge of the cover plate 110.

In some embodiments, referring to FIG. 3, the first score 111 further includes a third segment 1117 disposed between the second end 1114 and the fourth end 1116. The third segment 1117 smoothly transitions to connect the first segment 1111 and the second segment 1112.

By providing a third segment 1117 for a smooth transition between the first segment 1111 and the second segment 1112, the continuous first score 111 is formed, and a stress on the cover plate 110 at the third segment 1117 is more concentrated. As the air pressure inside the battery increases, the third segment 1117 on the cover plate 110 bursts first, and then extends to the first segment 1111 and the second segment 1112, which burst respectively. This is conducive to the burst of the first score 111 and ensures a smooth start of the primary pressure relief.

Based on the embodiments mentioned above, the first segment 1111, the second segment 1112, and the third segment 1117 are all arc-shaped. Bending directions of the first segment 1111 and the second segment 1112 are different from a bending direction of the third segment 1117.

In other embodiments, the first segment 1111, the second segment 1112, and the third segment 1117 may also be straight lines.

In the embodiments of the present application, by designing that the first segment 1111, the second segment 1112, and the third segment 1117 are arc-shaped, and the bending directions of the first segment 1111 and the second segment 1112 are different from the bending direction of the third segment 1117, so as to ensure that the first segment 1111 and the second segment 1112 are smoothly connected through the third segment 1117, and the first score 111 bursts first at the third segment 1117. Further, the arc-shaped design can increase a length of the first score 111, which increases the burst area, which is conducive to the primary pressure relief.

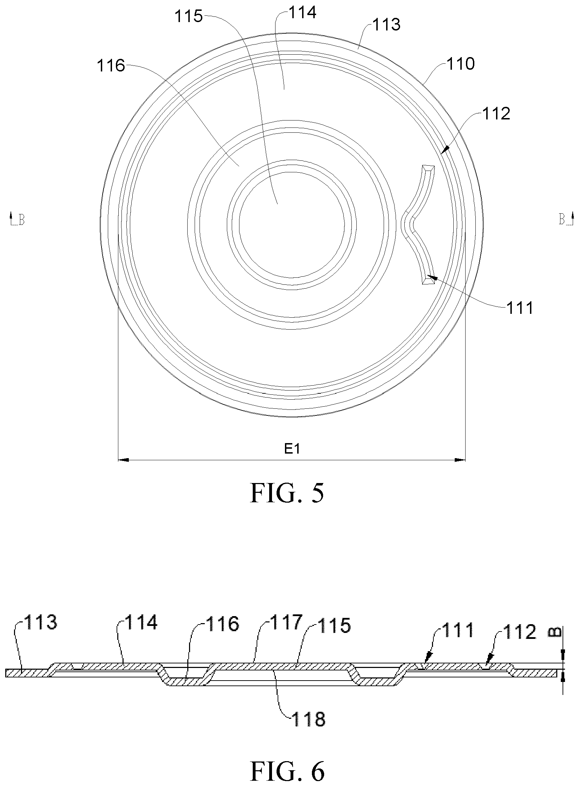

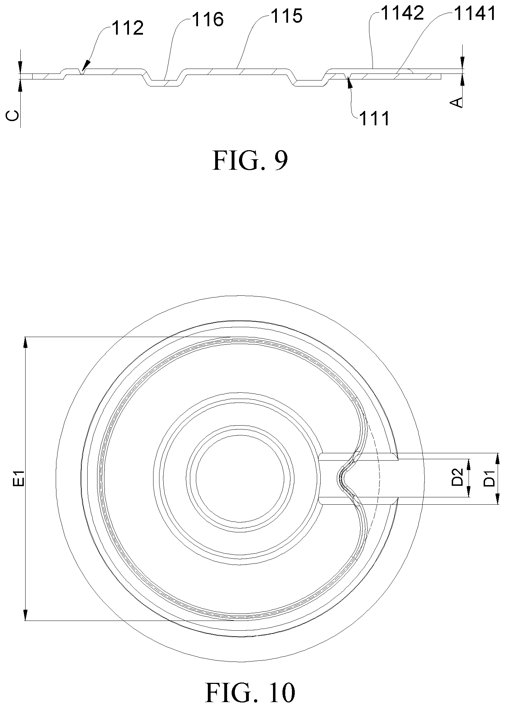

In some embodiments, referring to FIG. 5 and FIG. 10, an outer diameter of the second score 112 is E1, and the E1 satisfies 24 mm≤E1≤40 mm. For example, the E1 satisfies 30 mm≤E1≤35 mm. A value of the E1 may be 24 mm, 25 mm, 26 mm, 27 mm, 28 mm, 29 mm, 30 mm, 31 mm, 32 mm, 33 mm, 34 mm, 35 mm, 36 mm, 37 mm, 38 mm, 39 mm, 40 mm, or other unspecified values. A position of the second score 112 on the cover plate 110 is reasonably arranged to form a large enough pressure relief area, thereby ensuring the pressure relief effect.

In some embodiments, referring to FIG. 7, an included angle β is defined between a chord corresponding to an arc of the first segment 1111 and a chord corresponding to an arc of the second segment 1112. The included angle β satisfies 30°<P<150°. For example, a value of the included angle β may be 30°, 40°, 50°, 60°, 70°, 80°, 90°, 100°, 110°, 120°, 130°, 140°, 150°, or other values not specified. The chord corresponding to the arc of the first segment 1111 refers to a straight line where the chord corresponding to an inner arc of the first segment 1111 is located. The chord corresponding to the arc of the second segment 1112 refers to a straight line where the chord corresponding to an inner arc of the second segment 1112 is located. The included angle between the first segment 1111 and the second segment 1112 is designed reasonably, so that a smooth transition connection between the first segment 1111 and the second segment 1112 is realized within a range of the included angle β. The smoother the first segment 1111 and the second segment 1112, the smoother the burst of the first score 111, thereby avoiding jamming during the burst process of the first score 111.

In some embodiments, referring to FIG. 7, an arc length of the first segment 1111 is L1, an arc length of the second segment 1112 is L2, and an arc length of the third segment 1117 is L3. The L1 is equal to the L2. The first segment 1111 and the second segment 1112 are disposed symmetrically. The L3 satisfies 1 mm≤L3≤3 mm. A value of the L3 may be 1 mm, 2 mm, 3 mm, or other unspecified values. The L1 and the L2 satisfy 4 mm≤L1=L2≤8 mm. Values of the L1 and the L2 may be 4 mm, 5 mm, 6 mm, 7 mm, 8 mm, or other unspecified values. The arc lengths of the first segment 1111, the second segment 1112, and the third segment 1117 are designed reasonably, so that the third segment 1117 is broken through and extends to both sides during pressure relief. The first segment 1111 and the second segment 1112 are disposed symmetrically, so that both sides are subjected to a same force and a same burst speed, thereby ensuring the reliability of the primary pressure relief.

In some embodiments, referring to FIG. 4, the thickness of the cover plate 110 at the first score 111 is H1, and the thickness of the cover plate at the second score 112 is H2. The H1 and the H2 satisfy 20 μm≤H1≤115 μm and 25

μm≤H2≤135 μm. For example, the H1 and the H2 satisfy 45 μm≤H1≤55 μm and 80 μm≤H2≤100 μm. A value of the H1 may be 20μm, 30μm, 40μm, 50μm, 60μm, 70μm, 80μm, 90μm, 100μm, 110μm, 115μm, or other unspecified values. A value of the H2 may be 25μm, 35μm, 45μm, 55μm, 65μm, 75μm, 85μm, 95μm, 105μm, 115μm, 125μm, 135μm, or other unspecified values. It may be understood that the H1 is less than the H2.

It may be understood that the thicker the thicknesses of the cover plate 110 at the first score 111 and the second score 112, and the greater the pressure required to burst the first score 111 and the second score 112. The thicknesses of the cover plate 110 at the first score 111 and the second score 112 are positively correlated with the pressure required to burst the first score 111 and the second score 112. If the thicknesses of the cover plate 110 at the first score 111 and the second score 112 are thinner, the first score 111 and the second score 112 may burst within a normal operating range of the battery, affecting the performance of the battery. If the thicknesses of the cover plate 110 at the first score 111 and the second score 112 are thicker, the pressure required to burst first score 111 and the second score 112 is greater, causing the battery to explode easily. In the embodiments of the present application embodiment, a thickness range of the cover plate 110 where the first score 111 and the second score 112 are located is designed reasonably, so as to meet the normal operation of the battery, achieve the secondary pressure relief, and prevent the battery from exploding.

In some embodiments, the H1 and the H2 satisfy 5 μm≤H2-H1≤20 μm. A value of the (H2-H1) may be 5 μm, 10 μm, 15 μm, 20μm, or other unspecified values. The difference between the H2 and the H1 is within a reasonable range to ensure the reliability of the primary and secondary pressure relief.

In some embodiments, referring to FIG. 4, a thickness of an area on the cover plate 110 other than the first score 111 and the second score 112 is C, and the C satisfies 0.4 mm≤C≤1.0 mm. A value of the C may be 0.4 mm, 0.45 mm, 0.5 mm, 0.55 mm, 0.6 mm, 0.65 mm, 0.7 mm, 0.75 mm, 0.8 mm, 0.85 mm, 0.9 mm, 0.95 mm, 1.0 mm, or other unspecified values. The thickness of the cover plate 110 is designed reasonably, so that a structural strength of the cover plate 110 is ensured, and the first score 111 and the second score 112 can be processed to achieve the secondary pressure relief.

In some embodiments, referring to FIG. 4, a width of a groove opening of the first score 111 and a groove width of a groove opening of the second score 112 are both a, and the a satisfies 0.6 mm≤a≤1.5 mm. A value of the a may be 0.6 mm, 0.7 mm, 0.8 mm, 0.9 mm, 1.0 mm, 1.1 mm, 1.2 mm, 1.3 mm, 1.4 mm, 1.5 mm, or other unspecified values. The width of the groove opening of the first score 111 and the groove width of the groove opening of the second score 112 are designed reasonably, so as to avoid the widths of the groove openings of the first score 111 and the second score 112 being too small, which is not conducive to processing and burst, as well as to avoid the widths of the groove openings of the first score 111 and the second score 112 being too large, which causes the area of the first score 111 and the second score 112 to be too large, affecting the structural strength of the cover plate 110.

In some embodiments, referring to FIG. 5, the cover plate 110 includes a first sub-part 113 and a second sub-part 114. The first sub-part 113 is adjacent to the second sub-part 114. The first sub-part 113 is close to the edge of the cover plate 110. At least a part of a surface of the second sub-part 114 facing a wound core 140 is higher than a surface of the first sub-part 113 facing the wound core 140. At least a part of a surface of the second sub-part 114 facing away from the wound core 140 is higher than a surface of the first sub-part 113 facing away from the wound core 140. Both the first score 111 and the second score 112 are provided on the second sub-part 114.

Referring to FIG. 6, it may be understood that the cover plate 110 includes a first side surface 117 and a second side surface 118. The first side surface 117 is a side of the cover plate 110 away from the wound core 140, and the second side 118 is a side of the cover plate 110 facing the wound core 140. Along a direction from the second side surface 118 to the first side surface 117, at least part of the second sub-part 114 is disposed higher than the first sub-part 113. That is, the first side surface 117 of the second sub-part 114 is at least higher than the first side surface 117 of the first sub-part 113, and the second side surface 118 of the second sub-part 114 is at least higher than the second side surface 118 of the first sub-part 113. The cover plate 110 is designed with a concave-convex structure, so that as the pressure in the battery increases, the cover plate 110 deforms to be a hemispherical shape or a hat shape, and a space between the cover plate 110 and one end of the wound core is increased, and prevents the air pressure in the battery from increasing sharply and causing the battery to explode.

Based on the embodiments mentioned above, referring to FIG. 5, the cover plate 110 further includes a third sub-part 115. The first sub-part 113, the second sub-part 114, and the third sub-part 115 are integrally formed by stamping process. The first sub-part 113, the second sub-part 114, and the third sub-part 115 are arranged concentric in sequence along the radial direction of the cover plate 110. The first sub-part 113 and the second sub-part 114 are annular-shaped, and the third sub-part 115 is circular-shaped. The first sub-part 113 is adjacent to the edge of the cover plate 110. Along the direction from the second side surface 118 to the first side surface 117, which is a direction facing away from the battery, at least part of the second sub-part 114 is higher than the first sub-part 113, and the third sub-part 115 is higher than the first sub-part 113. The first score 111 and the second score 112 are concentric with the second sub-part 114.

It may be understood that as the air pressure in the battery increases, the cover plate 110 humps and deforms. The heights of the second sub-part 114 and the third sub-part 115 are designed to be higher than the height of the first sub-part 113, so that the cover plate 110 deforms to be the hemispherical-shape or the hat-shape, the space between the cover plate 110 and one end of the wound core is increased, and prevents the air pressure in the battery from increasing sharply and causing the battery to explode.

In some embodiments, referring to FIG. 5, the cover plate 110 further includes a fourth sub-part 116. The fourth sub-part 116 is annular-shaped. The fourth sub-part 116 is located between the second sub-part 114 and the third sub-part 115, and the fourth sub-part 116 connects the second sub-part 114 and the third sub-part 115.

The cover plate 110 is provided with a structure in which the first sub-part 113, the second sub-part 114, the fourth sub-part 116, and the third sub-part 115 are connected in sequence, so that the cover plate 110 can be formed by stamping, which is conducive to the processing and forming of the cover plate 110.

Based on the embodiments mentioned above, the surface of the first sub-part 113 facing the wound core 140 is higher than a surface of the fourth sub-part 116 facing the wound core 140, and the surface of the first sub-part 113 facing away from the wound core 140 is higher than a surface of the fourth sub-part 116 facing away from the wound core 140. The fourth sub-part 116 is configured to connect an electrode of the battery.

It may be understood that the first score 111 and the second score 112 are provided on the second sub-part 114, deformation forces of the first sub-part 113 and the fourth sub-part 116 acts on the first score 111 and the second score 112 during the deformation process of the cover plate 110, which is conducive to the smooth burst of the first score 111 and the second score 112. The fourth sub-part 116 connects to the electrode of the battery, so that the cover plate 110 is charged. Electric potentials at the cover plate 110 and the housing 150 are the same, and there is no potential difference, thereby reducing the risk of the cover plate 110 being corroded and improving the reliability of the battery.

In some embodiments, referring to FIG. 6, a distance between the first side surface 117 of the second sub-part 114 and the first side surface 117 of the first sub-part 113 in a thickness direction of the cover plate 110 is B. The B satisfies $0.8*C \leq B \leq 1.5*C$, where C is the thickness of the area on the cover plate 110 other than the first score 111 and the second score 112. For example, a value of the B may be 0.8*C, 0.9*C, 1.0*C, 1.1*C, 1.2*C, 1.3*C, 1.4*C, 1.5*C, or other unspecified values.

In some embodiments, referring to FIG. 8, the second sub-part 114 includes a boss 1141 and a sinking table 1141 connected together. The boss 1141 and the sinking table 1141 are enclosed in a closed circular shape. In a direction facing away from the wound core 140, the sinking table 1141 and the first sub-part 113 are at a same height. The first side surface 117 of the sinking table 1141 is in a same horizontal plane as the first side surface 117 of the first sub-part 113, and the second side surface 118 of the sinking table 1141 is in a same horizontal plane as the second side surface 118 of the first sub-part 113. The boss 1142 is disposed higher than the sinking table 1141 and the first sub-part 113. At least part of the first score 111 is provided on the sinking table 1141, and the second score 112 is provided on boss 1142.

It may be understood that by the boss 1141 and the sinking table 1141 are disposed on the second sub-part 114, the first score 111 is provided on the sinking table 1141, and the second score 112 is provided on boss 1142. When the air pressure in the battery increases, the cover plate 110 deforms, the first score 111 at the position of the sinking table 1141 is subjected to the force of deformation of the cover plate 110, thereby realizing the directional durst at the position of the first score 11, and ensuring an orderly progress of the secondary pressure relief. A directional burst method of the first score 111 includes two situations. One situation is that the first score 111 is completely burst instantly. Another situation is that the first score 111 has a burst point, and the first score 111 bursts from the burst point until the first score 111 is completely burst. The burst point is at a junction of the boss 1142 and the sinking table 1141 on the first score 111, at any location on the third segment 1117 of the first score 111, or at any location in the area of the sinking table 1141 where the first segment 1111 and the second segment 1112 of the first score 111 burst.

In other embodiments, the surface of the first sub-part 113 facing the wound core 140, the surface of the sinking table 1141 facing the wound core 140, and the surface of the fourth sub-part 116 facing the wound core 140 are at the same height. In addition, the surface of the first sub-part 113 facing away from the wound core 140, a surface of the sinking table 1141 away from the wound core 140, and a surface of the fourth sub-part 116 away from the wound core 140 are located at the same height, which is conducive to the processing and forming of the cover plate 110.

In some embodiments, the surface of the third sub-part 115 facing the wound core 140, the surface of the boss 1142 facing the wound core 140, and the surface of the fourth sub-part 116 facing the wound core 140 are at the same height. In addition, the surface of the third sub-part 115 facing away from the wound core 140, the surface of the boss 1142 facing away from the wound core 140, and the surface of the fourth sub-part 116 facing the wound core 140 are also located at the same height, which is conducive to the processing and forming of the cover plate 110.

In some embodiments, referring to FIG. 9, a depth of the sinking table 1141 is A. The A satisfies $0.8*C \leq A \leq 1.5*C$, where the C is the thickness of the area other than the explosion-proof groove 120 on the cover plate 110. For example, the A satisfies $1*C \leq A \leq 1.3*C$. A value of the A may be 0.8*C, 0.9*C, 1.0*C, 1.1*C, 1.2*C, 1.3*C, 1.4*C, 1.5*C, or other unspecified values. The depth A of the sinking table 1141 refers to a vertical distance between the first side surface 117 of the boss 1142 and the first side surface 117 of the sinking table 1141.

In some embodiments, referring to FIG. 10, a width of a top of the sinking table 1141 is D1, and a width of a bottom of the sinking table 1141 is D2. The D1 satisfies $4 \text{ mm} \leq D1 \leq 12 \text{ mm}$.

The D2 satisfies $D2 = D1 - 2*C*\tan(\alpha - 90°)$ and $D2 > 2 \text{ mm}$.

Where the $\alpha$ is an included angle defined between the bottom and one side of the sinking table 1141, and the $\alpha$

satisfies $100° \leq \alpha \leq 170°$.

The C is the thickness of the area on the cover plate 110 other than the first score 111 and the second score 112.

A value of the D1 may be 4 mm, 5 mm, 6 mm, 7 mm, 8 mm, 9 mm, 10 mm, 11 mm, 12 mm, or other unspecified values. A value of the $\alpha$ may be 100°, 110°, 120°, 130°, 140°, 150°, 160°, 170°, or other unspecified values. A size of the sinking table 1141 is designed reasonably to ensure the directional burst effect of the battery explosion-proof structure.

In some embodiments, the cover plate 110 at the first score 111 bursts under the first pressure. The cover plate 110 at the second score 112 bursts under the second pressure. The magnitude of the first pressure is P1, and the P1 satisfies 0.5 Mpa<P1<1.5 Mpa. The magnitude of the second pressure is P2, and the P2 satisfies 1.5 Mpa$\leq$P2<2.5 Mpa.

Under normal operating conditions of the battery, the internal pressure of the battery will reach 0.5 Mpa. Generally, the internal pressure increases with the temperature and the electrolyte decomposition for a period of time before the battery triggers thermal runaway. In order to discharge the combustible gases decomposed by the electrolyte and does not affect the normal operation of the battery, the first pressure P1 is set at (0.5 Mpa, 1.5 Mpa), such as 0.6 Mpa, 0.7 Mpa, 0.8 Mpa, 0.9 Mpa, 1.0 Mpa, 1.1 Mpa, 1.2 Mpa, 1.3 Mpa, 1.4 Mpa, or other unspecified values. At an end of the battery thermal runaway period, the battery pressure rises to a certain extent, so that the explosion-proof valve is required to burst and release the internal combustion substances of the battery to prevent the battery from exploding. The second pressure P2 is set at [1.5 Mpa, 2.5 Mpa), such as 1.5 Mpa, 1.6 Mpa, 1.7 Mpa, 1.8 Mpa, 1.9 Mpa, 2.1 Mpa, 2.2 Mpa, 2.3 Mpa, 2.4 Mpa, or other unspecified values.

In some embodiments, cross-sectional shapes of the first score 111 and/or the second score 112 are V-shaped, semicircular-shaped, trapezoidal-shaped, U-shaped, or parabolic-shaped along the thickness direction of the cover plate 110. The cross-sectional shapes of the first score 111 and the second score 112 on the cover plate 110 are the same or different. The cross-sectional shapes are diverse, which is convenient for processing.

In some embodiments, the thickness H2 of the cover plate (110) at the second score (112) is calculated according to a formula (1) as follows:

$$H2 = (P2*E1)/(4*Q) \qquad (1).$$

Where the Q is a tensile strength of a material prepared for the cover plate 110, the E1 is an outer diameter of an annular ring where the second score is located, and the P2 is a pressure to burst the cover plate 110 at the second score 112.

The thickness H2 of the cover plate 110 at the second score 112 is calculated by using the above-mentioned formula (1). The second score 112 is designed according to different positions and material characteristics. Further, the thickness H1 of the cover plate 110 at the first score 111 is designed according to the second score 112, which is convenient for design, accurate for calculation results, and ensures the performance of the cover plate 110.

In some embodiments, referring to FIG. 6, the cover plate 110 includes the first side surface 117 and the second side surface 118 disposed oppositely. The first score 111 and the second score 112 are both provided on the first side surface 117.

In one embodiment, the cover plate 110 includes the first side surface 117 and the second side surface 118 disposed oppositely. The first score 111 and the second score 112 are both provided on the second side surface 118.

In one embodiment, the cover plate 110 includes the first side surface 117 and the second side surface 118 disposed oppositely. The first score 111 is provided on the first side surface 117, and the second score 112 is provided on the second side surface 118.

In one embodiment, the cover plate 110 includes the first side surface 117 and the second side surface 118 disposed oppositely. The first score 111 is provided on the second side surface 118, and the second score 112 is provided on the first side surface 117.

It may be understood that the positions of the first score 111 and the second score 112 on the cover plate 110 are diverse, so as to achieve the purpose of the primary and the secondary pressure relief. The diverse design is convenient for the processing and forming of the first score 111 and the second score 112.

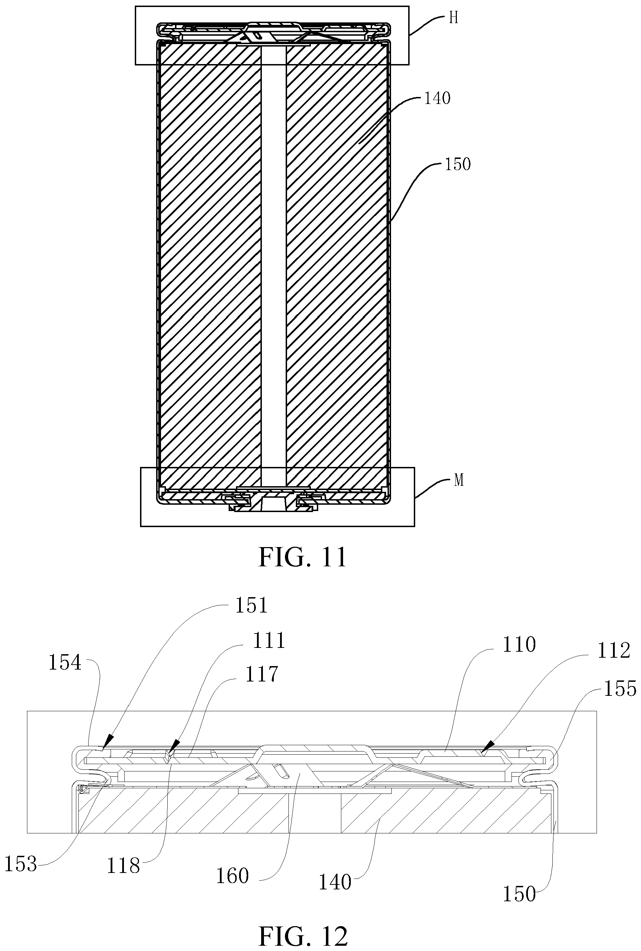

Referring to FIG. 11, FIG. 12, and FIG. 13, the embodiments of the present application further provide a battery. The battery includes the battery explosion-proof structure mentioned above, a wound core 140, and a housing 150. The wound core 140 is installed inside the housing 150. One end of the housing 150 is provided with an opening 151. The cover plate 110 is sealed and connected to the housing 150 to seal the opening 151. The battery has the same technical effects as the battery explosion-proof structure in any one of the embodiments mentioned above, which will not be repeated herein.

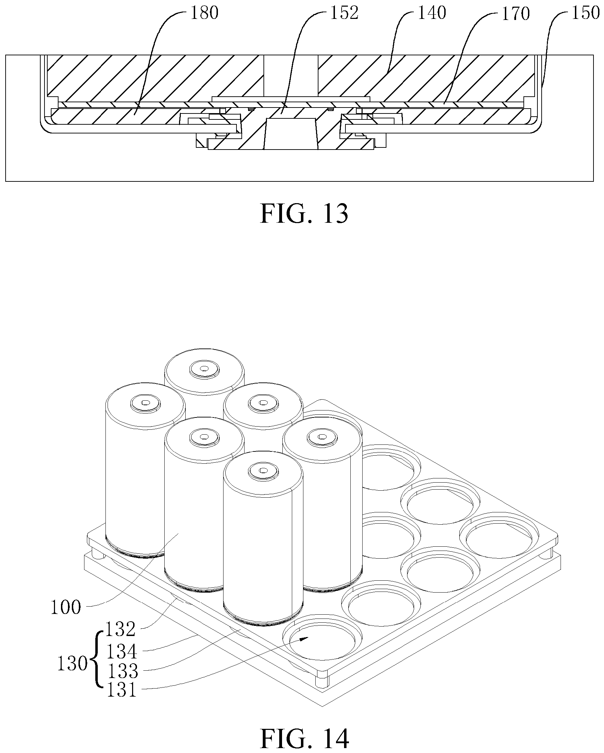

Based on the embodiments mentioned above, referring to FIG. 12 and FIG. 13, the battery further includes a first current collector 160, a second current collector 170, and an insulating member 180. The wound core 140, the first current collector 160, and the second current collector 170 are all disposed inside the housing 150. The cover plate 110 is sealed and connected to the housing 150 to seal the opening 151. The second side surface 118 of the cover plate 110 is in contact with one side of the first current collector 160, and another side surface of the first current collector 160 is welded with the negative terminal of the wound core 140. A peripheral side of the first current collector 160 is connected to an inner surface of the housing 150, so that the cover plate 110 and the housing 150 are charged. There is no potential difference between the cover plate 110 and the housing 150, thereby reducing a risk of the cover plate 110 being corroded, and improving the reliability of the battery. An end of the housing 150 facing away from the cover plate 110 is provided with a positive terminal 152. The positive terminal 152 is sealed and connected to the housing 150 through an insulating sealing ring. The second current collector 170 is welded with the wound core 140 and the positive terminal 152 and disposed between the second current collector 170 and the end of the housing 150 to insulate the second current collector 170 and the housing 150.

In some embodiments, referring to FIG. 12, the cover plate 110 and the housing 150 are sealed and connected by a sealing member 155, which is convenient to assemble the cover plate 110 and the housing 150, and the process is simple. The peripheral side of the first current collector 160 is connected to the inner surface of the housing 150, so that the housing 150 is negatively charged. The first current collector 160 and the cover plate 110 may or may not be in contact. When the first current collector 160 is in contact with the cover plate 110, the cover plate 110 is also negatively charged. There is no potential difference between the cover plate 110 and the housing 150, thereby reducing the risk of the cover plate 110 being corroded, and improving the reliability of the battery.

Based on the embodiments mentioned above, referring to FIG. 12, a part of a side wall of the housing 150 close to the opening 151 shrinks inwardly to form a flange 153. A side wall of the opening 151 of the housing 150 is crimped to form a pressing plate 154. The pressing plate 154 is arranged at relative intervals from the flange 153. The cover plate 110 is installed between the flange 153 and the pressing plate 154. The sealing member 155 is provided between the cover plate 110, and the flange 153 and the pressing plate 154 to ensure the sealing ability of the cover plate 110. Specifically, the sealing member 155 is a sealing ring, and a compression ratio of the sealing ring ranges from 30% to 70%, thereby improving the pressure relief effect.

In other embodiments, the cover plate 110 and the housing 150 are connected by laser welding. The laser welding has advantages such as simple processes and good sealing ability. In this case, the first current collector 160 is directly in contact with the housing 150, so that the housing 150 is negatively charged.

The embodiment of the present application further provides a battery pack including the battery mentioned above. The battery pack has the same technical effects as the battery explosion-proof structure, which will not be repeated herein.

In some embodiments, referring to FIG. 14, FIG. 15, and FIG. 16, the battery pack further includes a mounting base 130. The mounting base 130 is provided with a plurality of mounting grooves 131 and a plurality of baffle plates 132. The batteries, the mounting grooves 131, and the baffle plates 132 are one-to-one correspond. An end of the batteries adjacent to the body 111 is mounted inside a corresponding one of the mounting grooves 131. Each of the baffle plates 132 is located on a side of a corresponding one of the mounting grooves 131 away from the batteries. The first score 111 includes a first groove wall 1118 and a second groove wall 1119. The second groove wall 1119 is closer to a center of the cover plate 111 than the first groove wall 1118. A projection of each of the baffle plates 132 on one side of the body 111 is located at one side of the first groove wall 1118 away from the second groove wall 1119.

A width of each of the baffle plates 132 is greater than or equal to a length of the first score 111. The baffle plates 132 may be flat plates or arc-shaped plates.

It may be understood that as the pressure inside the batteries 100 increases, the first score 111 in the sinking table 1141 bursts, and gases and materials in the batteries 100 are ejected from the first score 111. By providing the baffle plates 132 on the mounting base 130, the baffle plates 132 are located below the sinking table 1141, and a projection of each of the baffle plates 132 on a plane where the cover plate 110 is located is positioned against the first score 111. The baffle plates 132 block the materials ejected from the batteries 100, and prevents the ejected the materials from entering the adjacent battery 100 and polluting the adjacent batteries 100.

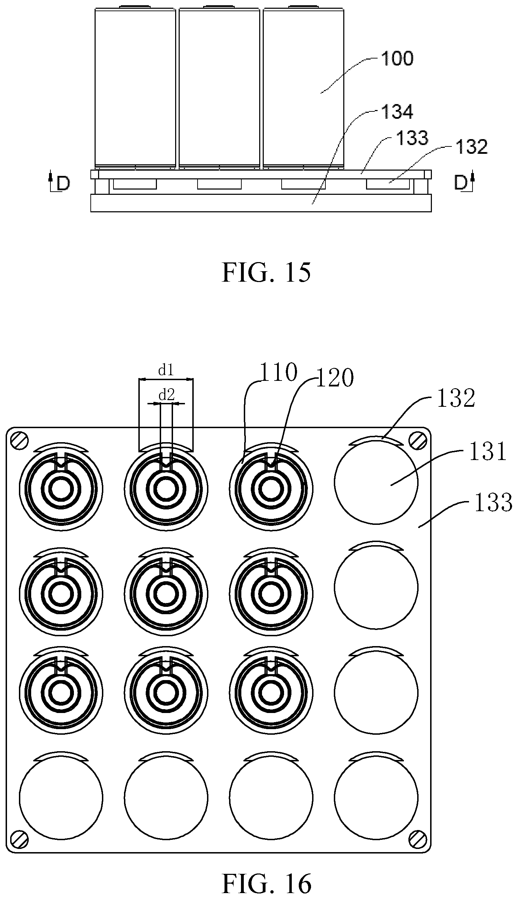

As can be seen from FIG. 16, the baffle plates 132 are arc-shaped plates. A width d1 of each of the baffle plates 132 is greater a width d2 of an area where the first score 1141 is located, so that the baffle plates 132 have a larger blocking area and better blocking effects.

Based on the above-described embodiments, referring to FIG. 15, the mounting base 130 includes a first sub-plate 133 and a second sub-plate 134 disposed at intervals. The first sub-plate 133 is connected to the second sub-plate 134. The mounting grooves 131 are provided on the first sub-plate 133. The baffle plates 132 are located between the first sub-plate 133 and the second sub-plate 134, and the baffle plates 132 are connected to the first sub-plate 133. The materials that flow out after the cover plate 110 burst flow between the first sub-plate 133 and the second sub-plate 134 to avoid affecting other batteries.

The following is a detailed description of the technical solutions and the technical effects of the present application by specific embodiments and proportions. The following embodiments are only partial embodiments of the present application, and are not specifically limited to the present application.

First Test Group

A structure of the battery explosion-proof structure in this test group is illustrated below. Referring to FIG. 1, a first side surface 117 of the cover plate 110 is provided with a first score 111 and a second score 112. The first score 111 includes a first segment 1111, a second segment 1112, and a third segment 1117. The first segment 1111, the second segment 1112, and the third segment 1117 are all arc-shaped. The second score 112 is circular. In a radial direction of the cover plate 110, the first score 111 is closer to a center of the cover plate 110 than the second score 112.

This test group adopts a test method described in Article 6.2. 4 of the GB/T31485-2015 standard.

An evaluation criteria adopted by this test group is illustrated below. A burst time of the first score 112 is T1, a burst time of the second score 112 is T2, and a burst time difference between the first score 111 and the second score 122 is ΔT. The T1 and the T2 meet conditions as follows: 50 seconds≤T1≤100 seconds, 60 seconds≤T2≤150 seconds, and 5 seconds≤ΔT≤50 seconds.

Parameters involved in the cover plate 110 include H1, H2, H2-H1, a, C, E1, L1, L2, L3, and β. The L1 is the same as L2. The parameters of basic group 1 are shown in Table 1.1 below.

Table 1.1: Parameters and validation results for the basic group 1

| Parameter Type | Value | Parameter Type | Value | Validation Results |
|---|---|---|---|---|
| H1/μm | 115.0 | E1/mm | 26.0 | T1=96 seconds, T2=128 second s, and ΔT=32 se conds |
| H2/μm | 120.0 | L1/mm | 5.0 | |
| (H2-H1)/μm | 5.0 | L2/mm | 5.0 | |
| a/mm | 0.6 | L3/mm | 2.00 | |
| C/mm | 0.4 | β | 85° | |

According to the validation results of Table 1.1, the burst time of the first score 111 and the burst time of the second score 112 both meet the evaluation criteria, thereby meeting the performance of the explosion-proof structure, and realizing the secondary pressure relief.

Based on the parameters of the basic group 1, changes of the parameters of the cover plate 110 are controlled by a single variable method to set the comparative examples and examples. The changing parameters and the validation results of the comparative examples and the examples are shown in Table 1.2 to Table 1.8.

Table 1.2: Based on the basic group 1, the validation results of the comparative examples and examples are obtained by changing B.

| | H1/μm | H2/μm | Validation Results |
|---|---|---|---|
| Example 1 | 20.0 | 25.0 | T1=50 seconds, T2=60 second s, and ΔT=10 seconds |
| Example 2 | 67.0 | 72.0 | T1=76 seconds, T2=87 second s, and ΔT=11 seconds |
| Comparative Example 1 | 15.0 | 20.0 | T1=43 seconds, T2=48 second s, and ΔT=5 seconds |
| Comparative Example 2 | 120.0 | 125.0 | T1=126 seconds, T2=130 second s, and ΔT=4 seconds |

According to Table 1.2, when the H1 is within the set range and meets the performance requirements of the explosion-proof structure, the secondary pressure relief is achieved. When the H1 is below or exceeds the set range, the burst time of the primary pressure relief and the secondary pressure relief is earlier. When the H1 exceeds the set range, a time interval between the two pressure relief is short, and the pressure relief effect of the explosion-proof structure is not good.

Based on the basic group 1, the validation results of the comparative examples and examples are obtained by changing the H1 and the (H2-H1) with H1.

Table 1.3:

| | H2/μm | H2-H1/μm | Validation Results |
|---|---|---|---|
| Example 1 | 125.0 | 10.0 | T1=96 seconds, T2=132 sec onds, and ΔT=36 seconds |
| Example 2 | 135.0 | 20.0 | T1=96 seconds, T2=139 sec onds, and ΔT=43 seconds |

(continued)

|  | H2/$\mu$m | H2-H1/$\mu$m | Validation Results |
|---|---|---|---|
| Comparative Example 1 | 117.0 | 2.0 | T1=97 seconds, T2=101 sec onds, and $\Delta$T=4 seconds |
| Comparative Example 2 | 140.0 | 25.0 | T1=95 seconds, T2=153 sec onds, and $\Delta$T=58 seconds |

According to Table 1.3, when the (H2-H1) is within the set range and meets the performance requirements of the explosion-proof structure, the secondary pressure relief is achieved. When the (H2-H1) is below the set range, the time interval between the two pressure relief is short. When the (H2-H1) exceeds the set range, the time interval between the two pressure relief is longer, which increases the probability of battery explosion and reduces the secondary pressure relief effect of the explosion-proof structure.

Table 1.4: Based on the basic group 1, the validation results of the comparative examples and examples are obtained by changing the L3.

|  | L3/mm | Validation Results |
|---|---|---|
| Example 1 | 1.0 | T1=90 seconds, T2=123 seconds, and $\Delta$T=33 seconds |
| Example 2 | 3.0 | T1=86 seconds, T2=126 seconds, and $\Delta$T=40 seconds |
| Comparative Example 1 | 0.5 | T1=119 seconds, T2=123 seconds, and $\Delta$T=4 seconds |
| Comparative Example 2 | 4.0 | T1=70 seconds, T2=125 seconds, and $\Delta$T=55 seconds |

According to Table 1.4, when the L3 is within the set range and meets the performance requirements of the explosion-proof structure, the secondary pressure relief is achieved. When the L3 exceeds the set range, the time interval between the two pressure relief is longer When the L3 is below the set range, the time interval between the two pressure relief is short, which reduces the secondary pressure relief effect of the explosion-proof structure.

Table 1.5: Based on the basic group 1, the validation results of the comparative examples and examples are obtained by changing the L1 and L2.

|  | L1 and L2/mm | Validation Results |
|---|---|---|
| Example 1 | 4.0 | T1=93 seconds, T2=124 second s, and $\Delta$T=31 seconds |
| Example 2 | 8.0 | T1=97 seconds, T2=126 second s, and $\Delta$T=29 seconds |
| Comparative Example 1 | 1.0 | T1=84 seconds, T2=136 second s, and $\Delta$T=52 seconds |
| Comparative Example 2 | 15.0 | T1=100 seconds, T2=104 second s, and $\Delta$T=4 seconds |

According to Table 1.5, when the L1 and the L2 are within the set range and meets the performance requirements of the explosion-proof structure, the secondary pressure relief is achieved. When the L1 and the L2 are below the set range, the time interval between the two pressure relief is longer When the L1 and the L2 exceed the set range, the time interval between the two pressure relief is short, which reduces the secondary pressure relief effect of the explosion-proof structure.

Table 1.6: Based on the basic group 1, the validation results of the comparative examples and examples are obtained by changing the $\beta$.

|  | $\beta$ | Validation Results |
|---|---|---|
| Example 1 | 30° | T1=100 seconds, T2=127 secon ds, and $\Delta$T=27 seconds |
| Example 2 | 150° | T1=93 seconds, T2=122 second s, and $\Delta$T=29 seconds |
| Comparative Example 1 | 20° | T1=111 seconds, T2=114 secon ds, and $\Delta$T=3 seconds |
| Comparative Example 2 | 170° | T1=76 seconds, T2=132 second s, and $\Delta$T=56 seconds |

According to Table 1.5, when the $\beta$ is within the set range and meets the performance requirements of the explosion-proof structure, the secondary pressure relief is achieved. When the $\beta$ is below the set range, the time interval between the two pressure relief is longer When the β exceeds the set range, the time interval between the two pressure relief is short, which reduces the secondary pressure relief effect of the explosion-proof structure.

Second Test Group

A structure of the battery explosion-proof structure in this test group is illustrated below. Referring to FIG. 5, a first side surface 117 of the cover plate 110 is provided with a first score 111 and a second score 112. The first score 111 includes a first segment 1111, a second segment 1112, and a third segment 1117. The first segment 1111, the second segment 1112, and the third segment 1117 are all arc-shaped, and the second score 112 has a circular ring shape. In a radial direction of the cover plate 110, the first score 111 is closer to a center of the cover plate 110 than the second score 112. The cover plate 110 includes a first sub-part 113 and a second sub-part 114. The first score 111 and the second score 112 are both provided on the second sub-part 114.

This test group adopts a test method described in Article 6.2. 4 of the GB/T31485-2015 standard.

An evaluation criteria adopted by this test group is illustrated below. A burst time of the first score 112 is T1, a burst time of the second score 112 is T2, and a burst time difference between the first score 111 and the second score 122 is $\Delta T$. The T1 and the T2 meet conditions as follows: 50 seconds$\leq$T1$\leq$100 seconds, 60 seconds$\leq$T2$\leq$150 seconds, and 5 seconds$\leq\Delta T\leq$50 seconds.

Parameters involved in the cover plate 110 include H1, H2, H2-H1, a, C, L1, L2, L3, β, B, and E1. A basic group 2 is set. The parameters of the basic group 2 are shown in Table 2.1 below.

Table 2.1: Parameters and validation results for basic group 2 [0129]

| Parameter Type | Value | Parameter Type | Value | Validation Results |
|---|---|---|---|---|
| H1/$\mu$m | 115.00 | L1/mm | 5.00 | T1=91 seconds, T 2=119 seconds, an d $\Delta T$=28 seconds |
| H2/$\mu$m | 120.00 | L2/mm | 5.00 | |
| (H2-H1)/$\mu$m | 5.00 | L3/mm | 2.00 | |
| a/mm | 0.60 | β | 85° | |
| C/mm | 0.40 | B/mm | 0.32 | |
| | | E1/mm | 24.0 | |

According to the validation results of Table 2.1, the burst time of the first score 111 and the burst time of the second score 112 both meet the evaluation criteria, thereby meeting the performance of the explosion-proof structure, and realizing the secondary pressure relief.

Based on the parameters of the basic group 2, changes of the parameters of the cover plate 110 are controlled by a single variable method to set the comparative examples and examples. The changing parameters and the verification results of the comparative examples and the examples are shown in Table 2.2.

Table 2.2: Based on the basic group 2, the validation results of the comparative examples and examples are obtained by changing the B.

| | B/mm | Validation Results |
|---|---|---|
| Example 1 | 0.48 | T1=89 seconds, T2=119 second s, and $\Delta T$=30 seconds |
| Example 2 | 0.60 | T1=87 seconds, T2=121 second s, and $\Delta T$=34 seconds |
| Comparative Example 1 | 0.20 | T1=95 seconds, T2=98 seconds, and $\Delta T$=3 seconds |
| Comparative Example 2 | 1.00 | T1=68 seconds, T2=125 second s, and $\Delta T$=57 seconds |

According to Table 1.3, when the B is within the set range and meets the performance requirements of the explosion-proof structure, the secondary pressure relief is achieved. When the B is below the set range, the time interval between the two pressure relief is short. When the B exceeds the set range, the time interval between the two pressure relief is longer, which increases the probability of battery explosion and reduces the secondary pressure relief effect of the explosion-proof structure.

Third Test Group

A structure of the battery explosion-proof structure in this test group is illustrated below. Referring to FIG. 8, a cover plate 110 includes a first side surface 117 and a second side surface 118 disposed oppositely. A first score 111 and a second score 112 are both provided on the first side surface 117. A projection of the first score 111 and the second score 112 on one side surface of the cover plate 110 is enclosed in a closed shape. That is, the first score 111 and the second score 112 are end-to-end connected, and the first score 111 and the second score 112 are communicated. The cover plate 110 includes a first sub-part 113 and a second sub-part 114. The first sub-part 113 is adjacent to the second sub-part 114. The first sub-part 113 is close to an edge of the cover plate 110. Along a direction from the second side surface 118 to the first side surface 117, at least part of the second sub-part 114 is disposed higher than the first sub-part 113. The first score 111 and the second score 112 are provided on the second sub-part 114. The second sub-part 114 includes a boss 1141 and a sinking table 1141 connected together. The boss 1141 and the sinking table 1141 are enclosed in a closed circular shape. The first side surface 117 of the sinking table 1141 is in a same horizontal plane as the first side surface 117 of the first sub-part 113, and the second side surface 118 of the sinking table 1141 is in a same horizontal plane as the second side surface 118 of the first sub-part 113. A surface of the boss 1142 facing a wound core 140 is higher than a surface of the first sub-part 113 facing the wound core 140 and a surface of the sinking table 1141 facing the wound core 140. A surface of the boss 1142 facing away from the wound core 140 is higher than a surface of the first sub-part 113 facing away from the wound core 140 and a surface of the sinking table 1141 facing away from the wound core 140. At least part of the first score 111 is provided on the sinking table 1141, and the second score 112 is provided on the boss 1142.

This test group adopts a test method described in Article 6.2. 4 of the GB/T31485-2015 standard.

An evaluation criteria adopted by this test group is illustrated below. A burst time of the first score 112 is T1, a burst time of the second score 112 is T2, and a burst time difference between the first score 111 and the second score 122 is ΔT. The T1 and the T2 meet conditions as follows: 50 seconds≤T1≤100 seconds, 60 seconds≤T2≤150 seconds, and 5 seconds≤ΔT≤50 seconds.

Parameters involved in the cover plate 110 include H1, H2, H2-H1, a, C, E1, L1, L2, L3, β, A, D1, D2, and α.

A basic group 3 is set. The parameters of the basic group 3 are shown in Table 3.1 below.

Table 3.1: Parameters and validation results for the basic group 3.

| Parameter Type | Value | Parameter Type | Value | Validation Results |
|---|---|---|---|---|
| H1/μm | 115.00 | L1/mm | 5.00 | T1=85 seconds, T 2=130 seconds, an d ΔT=45 seconds |
| H2/μm | 120.00 | L2/mm | 5.00 | |
| (H2-H1)/μm | 5.00 | L3/mm | 2.00 | |
| a/mm | 0.60 | β | 85° | |
| C/mm | 0.40 | A/mm | 0.32 | |
| D1/mm | 5.00 | D2/mm | 4.20 | |
| E1/mm | 24.0 | α | 135° | |

According to the validation results of Table 3.1, the burst time of the first score 111 and the burst time of the second score 112 both meet the evaluation criteria, thereby meeting the performance of the explosion-proof structure, and realizing the secondary pressure relief.

Based on the parameters of the basic group 3, changes of the parameters of the cover plate 110 are controlled by a single variable method to set the comparative examples and examples. The changing parameters and the verification results of the comparative examples and the examples are shown in Table 3.2.

Table 3.2: the validation results of the comparative examples and examples are obtained by changing the D1 and the D2 with the D1.

| | D1/mm | D2/mm | Validation Results |
|---|---|---|---|
| Example 1 | 4.00 | 3.20 | T1=85 seconds, T2=120 seconds, and ΔT=35 seconds |
| Example 2 | 12.00 | 11.20 | T1=86 seconds, T2=110 seconds, and ΔT=24 seconds |
| Comparative Example 1 | 1.00 | 0.20 | T1=72 seconds, T2=136 seconds, and ΔT=64 seconds |
| Comparative Example 2 | 18.00 | 17.20 | T1=103 seconds, T2=106 seconds, and ΔT=3 seconds |

According to Table 1.3, when the D1 is within the set range and meets the performance requirements of the explosion-proof structure, the secondary pressure relief is achieved. When the D1 is below the set range, the time interval between the two pressure relief is short. When the D1 exceeds the set range, the time interval between the two pressure relief is longer, which increases the probability of battery explosion and reduces the secondary pressure relief effect of the explosion-proof structure.

**Claims**

1. A battery explosion-proof structure, **characterized in that** the battery explosion-proof structure comprises a cover plate (110) provided with a first score (111) and a second score (112), wherein a thickness of the cover plate (110) at the first score (111) is less than a thickness of the cover plate (110) at the second score (112); the first score (111) comprises a first segment (1111) and a second segment (1112) connected, the first segment (1111) comprises a first end (1113) and a second end (1114), the second segment (1112) comprises a third end (1115) and a fourth end (1116), and a distance between the first end (1113) and the third end (1115) is greater than a distance between the second end (1114) and the fourth end (1116).

2. The battery explosion-proof structure according to claim 1, **characterized in that** the first score (111) is spaced from the second score (112), and the second score (112) is closer to a center of the cover plate (110) than the first score (111).

3. The battery explosion-proof structure according to claim 1, **characterized in that** the second score (112) is arc-shaped, the second score (112) comprises a fifth end (1121) and a sixth end (1122), and the first score (111) is located between the fifth end (1121) and the sixth end (1122).

4. The battery explosion-proof structure according to claim 3, **characterized in that** the first end (1113) is connected to the fifth end (1121), the third end (1115) is connected to the sixth end (1122), and the first score (111) and the second score (112) are communicated and enclosed in a closed shape.

5. The battery explosion-proof structure according to claim 1, **characterized in that** the second end (1114) is closer to a center of the cover plate (110) than the first end (1113), and the fourth end (1116) is closer to the center of the cover plate (110) than the third end (1115); or
the first end (1113) is closer to the center of the cover plate (110) than the second end (1114), and the third end (1115) is closer to the center of the cover plate (110) than the fourth end (1116).

6. The battery explosion-proof structure according to claim 1, **characterized in that** the first score (111) further comprises a third segment (1117) disposed between the second end (1114) and the fourth end (1116), and the third segment (1117) smoothly connects to the first segment (1111) and the second segment (1112).

7. The battery explosion-proof structure according to claim 6, **characterized in that** the first segment (1111), the second segment (1112), and the third segment (1117) are all arc-shaped, and bending directions of the first segment (1111) and the second segment (1112) are different from a bending direction of the third segment.

8. The battery explosion-proof structure according to claim 7, **characterized in that** an included angle $\beta$ is defined between a chord corresponding to an arc of the first segment (1111) and a chord corresponding to an arc of the second segment (1112), wherein the included angle $\beta$ satisfies $30° \leq \beta \leq 150°$; or,

   an arc length of the first segment (1111) is L1, an arc length of the second segment (1112) is L2, and an arc length of the third segment (1117) is L3; the L1, the L2, and the L3 satisfy $4\ mm \leq L1=L2 \leq 8\ mm$ and $1\ mm \leq L3 \leq 3\ mm$; or,
   an included angle $\beta$ is defined between a chord corresponding to an arc of the first segment (1111) and a chord corresponding to an arc of the second segment (1112), an arc length of the first segment (1111) is L1, an arc length of the second segment (1112) is L2, an arc length of the third segment (1117) is L3, the included angle $\beta$ satisfies $30° < P < 150°$, and the L1, the L2, and the L3 satisfy $4\ mm \leq L1=L2 \leq 8\ mm$ and $1\ mm \leq L3 \leq 3\ mm$.

9. The battery explosion-proof structure according to any one of claims 1-8, **characterized in that** the second score (112) is annular-shaped.

10. The battery explosion-proof structure according to claim 9, **characterized in that** an outer diameter of the second score (112) is E1, and the E1 satisfies 24 mm≤E1≤40 mm.

11. The battery explosion-proof structure according to claim 9, wherein the thickness H2 of the cover plate (110) at the second score (112) is calculated according to a formula (1) as follows:

$$H2=(P2*E1)/(4*Q) \qquad (1); \text{ and}$$

wherein the Q is a tensile strength of a material prepared for the cover plate (110); the E1 is an outer diameter of an annular ring where the second score (112) is located, and the P2 is a pressure to burst the cover plate (110) at the second score (112).

12. The battery explosion-proof structure according to any one of claims 1-11, **characterized in that** the thickness of the cover plate (110) at the first score (111) is H1, and the thickness of the cover plate (110) at the second score (112) is H2, wherein the H1 and the H2 satisfy 20 μm ≤H1≤115 μm and 25 μm≤H2≤135 μm

13. The battery explosion-proof structure according to claim 12, **characterized in that** the H1 and the H2 satisfy 5 μm≤H2-H1≤20 μm.

14. The battery explosion-proof structure according to any one of claims 1-13, **characterized in that** a width of a groove opening of the first score (111) and a groove width of a groove opening of the second score (112) are both a, and the a satisfies 0.6 mm≤a≤1.5 mm; or

a thickness of an area on the cover plate (110) other than the first score (111) and the second score (112) is C, and the C satisfies 0.4 mm≤C≤1.0 mm; or
a width of a groove opening of the first score (111) and a groove width of a groove opening of the second score (112) are both a, the a satisfies 0.6 mm≤a≤1.5 mm, a thickness of an area on the cover plate (110) other than the first score (111) and the second score (112) is C, and the C satisfies 0.4 mm≤C≤1.0 mm.

15. The battery explosion-proof structure according to any one of claims 1-13, **characterized in that** the cover plate (110) further comprises:

a first sub-part (113) close to an edge of the cover plate (110); and
a second sub-part (114) adjacent to the first sub-part (113), wherein both the first score (111) and the second score (112) are provided on the second sub-part (114);
wherein at least a part of a surface of the second sub-part (114) facing a wound core (140) is higher than a surface of the first sub-part (113) facing the wound core (140), and at least a part of a surface of the second sub-part (114) facing away from the wound core (140) is higher than a surface of the first sub-part (113) facing away from the wound core (140).

16. The battery explosion-proof structure according to claim 15, **characterized in that** the second sub-part (114) comprises:

a boss (1142); and
a sinking table (1141), wherein the first score (111) is at least partially disposed on the sinking table (1141); and
wherein a surface of the boss (1142) facing the wound core (140) is higher than the surface of the first sub-part (113) facing the wound core (140) and a surface of the sinking table (1141) facing the wound core (140), and a surface of the boss (1142) facing away from the wound core (140) is higher than the surface of the first sub-part (113) facing away from the wound core (140) and a surface of the sinking table (1141) facing away from the wound core (140).

17. The battery explosion-proof structure according to claim 16, **characterized in that** the cover plate (110) further comprises:
a third sub-part (115) concentric with the second sub-part (114), wherein the second sub-part (114) is located between the first sub-part (113) and the third sub-part (115), the third sub-part (115) is circular-shaped, and the sinking table (1141) and the boss (1142) are enclosed in a closed ring.

18. The battery explosion-proof structure according to claim 17, **characterized in that** the cover plate (110) further comprises:
a fourth sub-part (116) located between the second sub-part (114) and the third sub-part (115), wherein the fourth sub-part (116) is annular-shaped, and the fourth sub-part (116) connects to the second sub-part (114) and the third sub-part (115).

19. The battery explosion-proof structure according to claim 18, **characterized in that** the surface of the first sub-part (113) facing the wound core (140) is higher than a surface of the fourth sub-part (116) facing the wound core (140), and the fourth sub-part (116) is configured to connect an electrode of a battery; or

the surface of the first sub-part (113) facing the wound core (140), the surface of the sinking table (1141) facing the wound core (140), and the surface of the fourth sub-part (116) facing the wound core (140) are at a same height; and/or
a surface of the third sub-part (115) facing the wound core (140) and the surface of the boss (1142) facing the wound core (140) are at a same height, and a surface of the third sub-part (115) facing away from the wound core (140) and the surface of the boss (1142) facing away from the wound core (140) are at a same height.

20. The battery explosion-proof structure according to any one of claims 16-19, **characterized in that** a depth of the sinking table (1141) is A, and the A satisfies $0.8*C \leq A \leq 1.5*C$; and
wherein C is a thickness of an area on the cover plate (110) other than the first score (111) and the second score (112).

21. The battery explosion-proof structure according to any one of claims 16-19, **characterized in that** a width of a top of the sinking table is D1, a width of a bottom of the sinking table is D2, and the D1 and the D2 satisfy $4 \text{ mm} \leq D1 \leq 12 \text{ mm}$, $D2=D1-2*C*\tan (\alpha-90°)$, and $D2>2 \text{ mm}$; and
wherein C is a thickness of an area cover plate (110) other than the first score (111) and the second score (112), $\alpha$ is an included angle defined between the bottom and the side part of the sinking table, and the $\alpha$ satisfies $100° \leq \alpha \leq 170°$.

22. The battery explosion-proof structure according to any one of claims 1-13, **characterized in that** the cover plate (110) comprises a first side surface (117) and a second side surface (118) disposed oppositely, and the first score ( 111 ) and the second score (112)are both disposed on the first side surface (117); or

wherein the cover plate (110) comprises the first side surface (117) and the second side surface (118) disposed oppositely, and the first score (111) and the second score (112) are both disposed on the second side surface (118); or
wherein the cover plate (110) comprises the first side surface (117) and the second side surface (118) disposed oppositely, the first score (111) is provided on the first side surface (117), and the second score (112) is provided on the second side surface (118); or
wherein the cover plate (110) comprises the first side surface (117) and the second side surface (118) disposed oppositely, the first score (111) is provided on the second side surface (118), and the second score (112) is provided on the first side surface (117).

23. A battery, **characterized in that** the battery comprises:

the battery explosion-proof structure according to any one of claims 1-22;
a wound core (140);
a housing (150), wherein the wound core (140) is installed inside the housing (150), one end of the housing (150) is provided with an opening (151), and a cover plate (110) is sealed and connected to the housing to seal the opening (151);
optionally, the battery further comprises:

a positive terminal (152) disposed at another end of the housing (150) facing away from the cover plate (110);
a first current collector (160) welded to the wound core (140) and disposed between the cover plate (110) and one end of the wound core (140);
a second current collector (170) welded and disposed between the wound core (170) and the positive terminal (152); and
an insulating member (180) disposed between the second current collector (170) and the housing (150).

24. A battery pack, **characterized in that** the battery pack comprises the battery according to claim 23;
optionally, the mounting base (130) comprises a first sub-plate (133) and a second sub-plate (134) opposite and spaced apart, the mounting grooves (131) are provided on the first sub-plate (133), the baffle plates (132) are located between the first sub-plate (133) and the second sub-plate (134), and the baffle plates (132) are connected to the first sub-plate (133).

FIG. 1

FIG. 2

FIG. 3

FIG. 4

115    114    113

116    110

112

B    B

111

E1

## FIG. 5

113    114    116    117    115    111    112    B

118

## FIG. 6

FIG. 7

FIG. 8

FIG. 9

FIG. 10

FIG. 11

FIG. 12

180　　152　140　　170　　150

FIG. 13

100

132
134
130 { 133
131

FIG. 14

FIG. 15

FIG. 16

| | Europäisches Patentamt<br>European Patent Office<br>Office européen des brevets | **EUROPEAN SEARCH REPORT** | **Application Number**<br>EP 24 22 3352 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2023/123149 A1 (XU WEIDONG [CN] ET AL) 20 April 2023 (2023-04-20) | 1-6, 9-15, 22-24 | INV.<br>H01M50/143<br>H01M50/152 |
| A | * paragraph [0060] - paragraph [0066]; figures 5-7 * | 7,8, 16-21 | H01M50/213<br>H01M50/291<br>H01M50/559 |
| Y | CN 115 472 997 A (SHENZHEN HAIRUN NEW ENERGY TECH CO LTD ET AL.) 13 December 2022 (2022-12-13) * paragraph [0072] - paragraph [0075]; figure 7 * | 1-6, 9-15, 22-24 | H01M50/147<br>H01M50/342 |
| Y | US 11 831 043 B2 (SAMSUNG SDI CO LTD [KR]) 28 November 2023 (2023-11-28) | 15 | |
| A | * column 5 - column 6; figures 5-6 * | 1 | |
| A | WO 2023/205976 A1 (CONTEMPORARY AMPEREX TECHNOLOGY CO LTD [CN]) 2 November 2023 (2023-11-02) * the whole document * | 1 | |
| A | US 2023/113132 A1 (XU WEIDONG [CN] ET AL) 13 April 2023 (2023-04-13) * the whole document * | 1 | TECHNICAL FIELDS SEARCHED (IPC)<br><br>H01M |

The present search report has been drawn up for all claims

| Place of search | Date of completion of the search | Examiner |
|---|---|---|
| The Hague | 14 April 2025 | Verdelho, Luís |

## ANNEX TO THE EUROPEAN SEARCH REPORT
## ON EUROPEAN PATENT APPLICATION NO.

EP 24 22 3352

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2025

| Patent document cited in search report | | | Publication date | Patent family member(s) | | Publication date |
|---|---|---|---|---|---|---|
| US 2023123149 | A1 | | 20-04-2023 | CN | 216120620 U | 22-03-2022 |
| | | | | US | 2023123149 A1 | 20-04-2023 |
| CN 115472997 | A | | 13-12-2022 | CN | 115472997 A | 13-12-2022 |
| | | | | DE | 202023100807 U1 | 13-06-2023 |
| | | | | EP | 4401206 A1 | 17-07-2024 |
| | | | | US | 11909066 B1 | 20-02-2024 |
| US 11831043 | B2 | | 28-11-2023 | CN | 111630679 A | 04-09-2020 |
| | | | | CN | 119181838 A | 24-12-2024 |
| | | | | EP | 3726605 A1 | 21-10-2020 |
| | | | | KR | 20200069375 A | 16-06-2020 |
| | | | | US | 2021184321 A1 | 17-06-2021 |
| | | | | US | 2024097291 A1 | 21-03-2024 |
| | | | | WO | 2019117339 A1 | 20-06-2019 |
| WO 2023205976 | A1 | | 02-11-2023 | CN | 117337512 A | 02-01-2024 |
| | | | | EP | 4425672 A1 | 04-09-2024 |
| | | | | US | 2024222822 A1 | 04-07-2024 |
| | | | | WO | 2023205976 A1 | 02-11-2023 |
| US 2023113132 | A1 | | 13-04-2023 | CN | 216120624 U | 22-03-2022 |
| | | | | EP | 4167334 A1 | 19-04-2023 |
| | | | | ES | 2983257 T3 | 22-10-2024 |
| | | | | FI | 4167334 T3 | 24-06-2024 |
| | | | | HU | E067369 T2 | 28-10-2024 |
| | | | | LT | 4167334 T | 12-08-2024 |
| | | | | PT | 4167334 T | 08-07-2024 |
| | | | | US | 2023113132 A1 | 13-04-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB T314852015 A